# EUROPEAN PATENT APPLICATION

(11) **EP 3 076 232 A1**
(43) Date of publication of application: **05.10.2016**
(21) Application number: 15180440.8
(22) Date of filing: 10.08.2015
(51) Int. Cl.: G02F 1/1335, F21V 8/00, G02F 1/1333

(54) **DISPLAY APPARATUS**

(30) Priority: 31.03.2015 KR 20150045048
(71) Applicant: Samsung Electronics Co., Ltd, Gyeonggi-do 443-742 (KR)
(72) Inventor: JANG, Nae-Won, Gyeonggi-do (KR); LEE, Dae-Hee, Gyeonggi-do (KR); LEE, Kye Hoon, Gyeonggi-do (KR); LEE, Young Chol, Gyeonggi-do (KR); CHO, Byoung-Jin, Gyeonggi-do (KR); HYUNG, Sin-Wook, Busan (KR)
(74) Representative: Appleyard Lees IP LLP

(57) **Abstract**

Provided is a display apparatus including: a display panel; and a backlight unit configured to output light to the display panel, wherein the backlight unit includes: a light source configured to emit light having a particular color; a light guide plate (LGP) configured to scatter the light incident from the light source and configured to emit the scattered light through a light emitting surface; and an optical converter configured to convert the light emitted from the light source and including an optical conversion pattern disposed on an inner side from the display panel, the optical converter including an optical conversion material for converting color of light; and wherein the optical converter is provided at an edge portion of the backlight unit.

## Description

### BACKGROUND

### 1. Field

Apparatuses and methods consistent with exemplary embodiments relate to a display apparatus, and more particularly, to a display apparatus that is capable of improving color uniformity.

### 2. Description of the Related Art

In the related art, display apparatuses are apparatuses for displaying images, such as televisions (TVs) or monitors.

For example, display apparatuses are apparatuses for displaying broadcasting signals or image data having various formats by including display panels on which images are displayed.

The display panels described above may be classified into emissive display panels that emit light by themselves and nonemissive display panels that do not emit light by themselves. Examples of emissive display panels include, but not limited to, cathode ray tube (CRT) panels, electro luminescence (EL) panels, organic light emitting diode (OLED) panels, vacuum fluorescence display (VFD) panels, field emission display (FED) panels, and plasma display panels (PDPs). Examples of nonemissive display panels include, but are not limited to, liquid crystal display (LCD) panels. LCD panels and PDPs have been recently widely used.

An LCD panel includes a backlight unit which emits white light and a display panel which transmits or blocks light emitted from the backlight unit.

In particular, it is imperative that the LCD panel has uniform brightness and uniform tone throughout the entire surface of the LCD panel. To this end, the backlight unit has to emit light having uniform brightness and uniform tone throughout the entire surface of the backlight unit.

However, due to a structural difference between an edge portion and a center portion of the backlight unit, there is a difference between brightness and tone of light emitted from the edge portion and brightness and tone of light emitted from the center portion.

Also, a larger amount of light is generated in a direction of an optical axis of the backlight unit, whereas a relatively small amount of light is generated in a lateral direction of the backlight unit. Thus, color uniformity and brightness uniformity may be diminished.

### SUMMARY

Aspects of one or more exemplary embodiments provide a display apparatus that is capable of improving color uniformity by correcting colors of reflected lights emitted from light sources disposed at edge portions of a backlight unit.

In accordance with an aspect of an exemplary embodiment, there is provided a display apparatus including: a display panel; and a backlight unit that outputs light to the display panel, wherein the backlight unit may include: light sources disposed to emit light having a particular color; a light guide plate (LGP) that scatters light incident from the light sources and emits the scattered light through an emitting surface; and an optical converter disposed to convert light emitted from the light sources, and the optical converter may be disposed at edge portions of the backlight unit and may include an optical conversion material for converting color of light and optical conversion patterns disposed on the LGP.

The optical conversion material may include a fluorescent material.

The backlight unit may include a mold frame disposed to support the display panel, and the optical converter may be disposed on an inner surface of the mold frame.

The mold frame may include: a front surface disposed so that the display panel is supported on the front surface; and a rear surface in which an installation groove for installing the optical converter is formed.

The optical conversion patterns may include one among a circular shape, an oval shape, a rectangular shape, and a polygonal shape.

The optical conversion patterns may be formed on a rear surface of the LGP.

The backlight unit may further include a quantum dot sheet disposed to convert light emitted toward a front surface of the LGP.

Densities of the optical conversion patterns may be formed by a difference between the edge portions and a center portion of the LGP.

Densities of the optical conversion patterns may be reduced as the optical conversion patterns get closer to a center of the LGP from ends of the LGP.

In accordance with an aspect of another exemplary embodiment, there is provided a display apparatus includes: a display panel on which an image is formed; light sources disposed to emit light having one among red, green, and blue colors toward the display panel; a light guide plate (LGP) that scatters light incident from the light sources and emits the scattered light through an emitting surface; a mold frame disposed to support the display panel; a reflector member that reflects light leaking toward an outside of the LGP in a direction of the LGP; and an optical converter disposed to convert light emitted from the light sources, wherein the optical converter may be disposed on the mold frame and may include an optical conversion material for converting color of light and optical conversion patterns disposed on the LGP.

The optical conversion material may include a fluorescent material.

The optical conversion patterns may be formed on a rear surface of the LGP.

Densities of the optical conversion patterns may be formed by a difference between edge portions and a center portion of the LGP.

Densities of the optical conversion patterns may be reduced as the optical conversion patterns get closer to a center of the LGP from ends of the LGP.

In accordance with still an aspect of another exemplary embodiment, there is provided a display apparatus including: a display panel on which an image is formed; light sources disposed to emit light having a particular color; a light guide plate (LGP) that scatters light incident from the light sources and emits the scattered light in a direction of the display panel; a quantum dot sheet that converts light emitted toward a front surface of the LGP; a mold frame disposed to support the display panel; and an optical converter disposed to convert light emitted from the light sources, wherein the optical converter may be disposed on the mold frame and may include an optical conversion material for converting color of light and optical conversion patterns disposed on the LGP.

The optical conversion patterns may be formed on a rear surface of the LGP.

The light sources may include one among red, green, and blue colors.

The optical converter may include a yellow fluorescent material for converting blue light into white light.

Densities of the optical conversion patterns may be formed by a difference between edge portions and a center portion of the LGP.

Densities of the optical conversion patterns may be reduced as the optical conversion patterns get closer to a center of the LGP from ends of the LGP.

In accordance with an aspect of another exemplary embodiment, there is provided a display apparatus including: a display panel; and a backlight unit configured to output light to the display panel, wherein the backlight unit includes: a light source configured to emit light having a particular color; a light guide plate (LGP) configured to scatter the light incident from the light source and configured to emit the scattered light through a light emitting surface; and an optical converter configured to convert the light emitted from the light source and including an optical conversion pattern disposed on an inner side from the display panel, the optical converter made of an optical conversion material for converting color of light; and wherein the optical converter is provided at an edge portion of the backlight unit.

The backlight unit may include a mold frame configured to support the display panel, and the optical converter may be disposed on at least one of an inner surface of the mold frame or an inner surface of the LGP.

The mold frame may include: a front surface on which the display panel is supported; and a rear surface including an installation groove, the optical converter provided in the installation groove.

The optical conversion pattern may include at least one of a circular shape, an oval shape, a rectangular shape, and a polygonal shape.

The optical conversion pattern may be provided on a rear surface of the LGP.

The backlight unit may further include a quantum dot sheet configured to convert the light emitted from the light emitting surface of the LGP.

The optical conversion pattern may include a plurality of optical conversion patterns and density of the optical conversion patterns is formed based on a position of each optical conversion pattern of the plurality of optical conversion patterns with respect to the edge portion and a center portion of the LGP.

The optical conversion pattern may include a plurality of optical conversion patterns and density of the plurality of optical conversion patterns is decreased toward a center portion of the LGP from the edge portion of the LGP.

In accordance with an aspect of another exemplary embodiment, there is provided a display apparatus including: a display panel configured to form an image; a light source configured to emit light having at least one of red, green, and blue colors toward the display panel; a light guide plate (LGP) configured to scatter the light incident from the light source and configured to emit the scattered light through a light emitting surface; a mold frame supporting the display panel; a reflector member configured to reflect light leaking out of the LGP in a direction of the LGP; and an optical converter configured to convert the light emitted from the light source, wherein the optical converter is disposed on the mold frame or the LGP, includes an optical conversion pattern and is made up of an optical conversion material for converting color of light.

In accordance with an aspect of another exemplary embodiment, there is provided a display apparatus including: a display panel configured to form an image; a light source configured to emit light having a particular color; a light guide plate (LGP) configured to scatter the light incident from the light source and configured to emit the scattered light in a direction of the display panel; a quantum dot sheet configured to convert the light emitted from a light emitting surface of the LGP; a mold frame supporting the display panel; and an optical converter configured to convert the light emitted from the light source, wherein the optical converter is provided on at least one of the mold frame and the LGP and includes an optical conversion pattern and is made up of an optical conversion material for converting color of light.

### BRIEF DESCRIPTION OF THE DRAWINGS

The above and/or other aspects of the disclosure will become apparent and more readily appreciated from the following description of the exemplary embodiments, taken in conjunction with the accompanying drawings of which:
FIG. 1 is a perspective view of a display apparatus according to an exemplary embodiment;
FIG. 2 is an exploded perspective view of the display apparatus according to an exemplary embodiment;
FIG. 3 is a cross-sectional view taken along line A-A' of FIG. 1 according to an exemplary embodiment;
FIG. 4 is a schematic view of a light guide plate (LGP) having an optical converter of a display apparatus according to an exemplary embodiment;
FIG. 5 is an enlarged view of portion B of FIG. 4 according to an exemplary embodiment;
FIG. 6 is a schematic view of an LGP having an optical converter of a display apparatus according to still an exemplary embodiment; and
FIG. 7 is a schematic view of an LGP having an optical converter of a display apparatus according to an exemplary embodiment.

### DETAILED DESCRIPTION

Embodiments described in the specification and configurations shown in the drawings of the specification are merely exemplary embodiments of the disclosure, and there may be various modified examples that may replace the embodiments and the drawings of the specification at the time of filing an application of the disclosure. Hereinafter, exemplary embodiments will be described in detail with reference to the accompanying drawings. Meanwhile, terms "front end", "rear end", "upper portion", "lower portion", "top end", and "bottom end" used in the following description are defined based on the drawings. A shape and a position of each of elements are not limited by the terms.

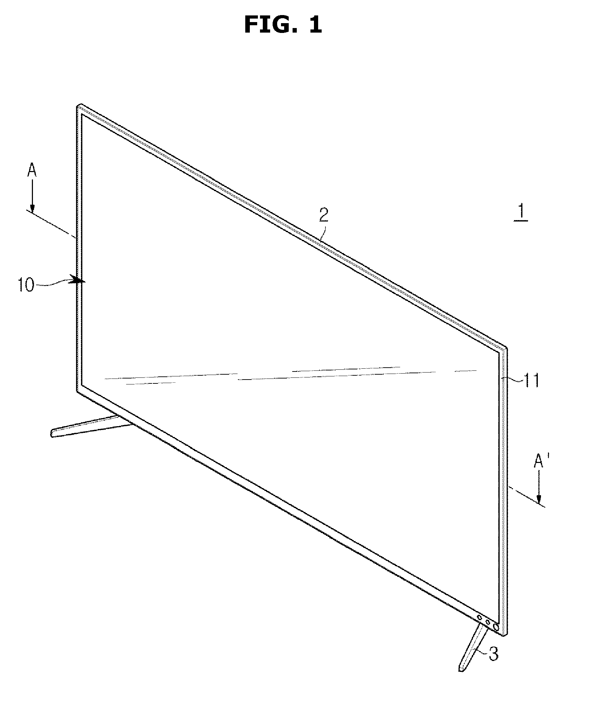

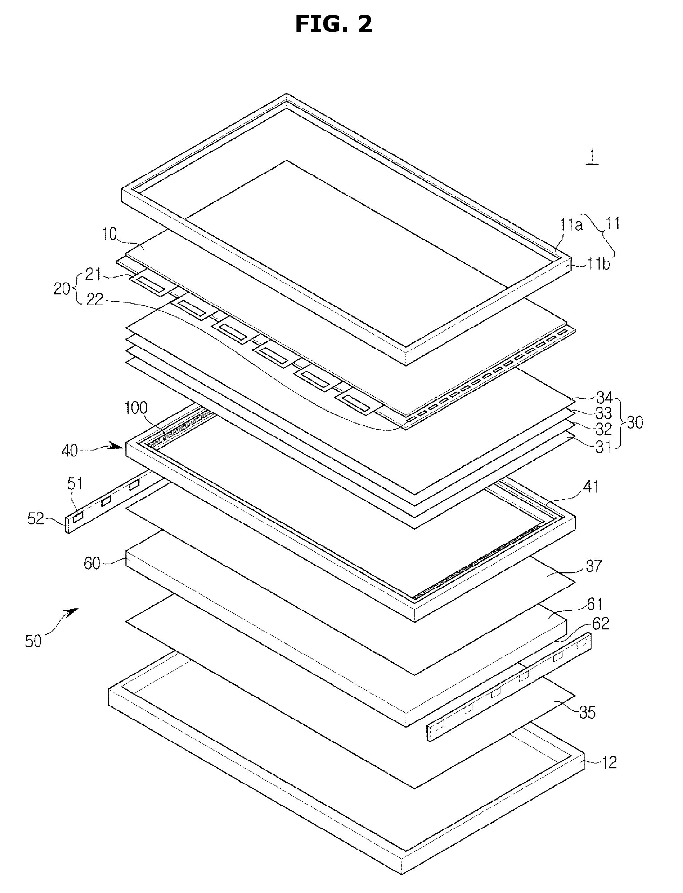

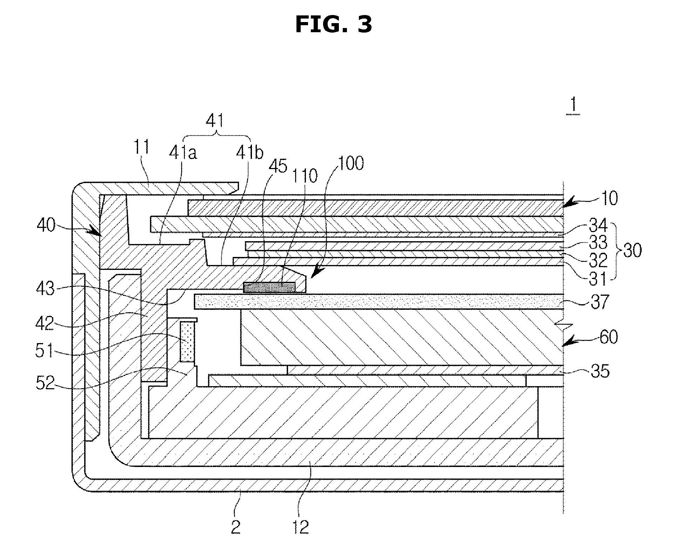

FIG. 1 is a perspective view of a display apparatus according to an exemplary embodiment, and FIG. 2 is an exploded perspective view of the display apparatus according to an exemplary embodiment, and FIG. 3 is a cross-sectional view taken along line A-A' of FIG. 1 according to an exemplary embodiment.

A display apparatus 1 is an apparatus that may process image signals received from the outside and may visually display a processed image from the received image signals. Hereinafter, the display apparatus 1 is a television (TV). However, the exemplary embodiment is not limited thereto. For example, the display apparatus 1 may be implemented to have various forms including a monitor, a portable multimedia device, and a portable communication device. Any display apparatus that is capable of visually displays an image may be used as the display apparatus 1, and the form of the display apparatus is not particularly limited.

As illustrated in FIGS. 1 through 3, the display apparatus 1 includes a display panel 10 on which image information is displayed, and a case 2 that is disposed at an outside area of the display panel 10 so as to accommodate the display panel 10 and various components in the display apparatus 1. Also, a backlight unit (BLU) 50 and an optical member 30 are disposed in the case 2.

The case 2 is formed to surround edge portions and a rear surface of the display panel 10. A stand 3 for installing the display apparatus 1 on an installation surface (not shown), such as on the bottom, is disposed at a lower portion of the case 2.

Meanwhile, although not shown, the display apparatus 1 according to the exemplary embodiment may also be fixed onto a wall using a wall-hanger bracket installed on the wall, instead of the stand 3. In the exemplary embodiment, the wall-hanger bracket may also be separably installed at the case 2 or fixed onto the wall using the case 2.

Referring to FIGS. 2 and 3, a top chassis 11 disposed on a front surface of the display panel 10 to form a front edge of the display apparatus 1, a bottom chassis 12 disposed on a rear surface of the display panel 10, and a mold frame 40 disposed in the display apparatus 1 may be disposed in front of the case 2.

The top chassis 11 is formed to have a shape of a rectangular ring and is disposed on the same surface as a surface on which the display panel 10 on which an image is displayed, is disposed, so that edge portions of the display panel 10 are not exposed to the outside.

The bottom chassis 12 may be disposed on an opposite surface to the surface on which the display panel 10 is disposed. The bottom chassis 12 may be disposed to prevent various components included in the display apparatus 1 from being exposed to the outside and to protect various components included in the display apparatus 1 from an external shock.

The mold frame 40 is disposed to support the display panel 10, the optical member 30, and the backlight unit 50. The mold frame 40 is disposed to fix the display panel 10, the optical member 30, and the backlight unit 50 to the top chassis 11 and the bottom chassis 12.

The display panel 10 may display various images according to image signals input from the outside. In the exemplary embodiment, the display panel 10 may be an emissive display panel on which a plurality of pixels that constitute the display panel 10 generate light by themselves so that an image can be generated, or a nonemissive display panel on which the plurality of pixels reflect/transmit/block light so that an image can be generated.

Hereinafter, the display panel 10 will be described on the assumption that the display panel 10 is a nonemissive display panel on which the plurality of pixels reflect/transmit/block light emitted from the backlight unit 50 so that an image can be generated.

The display panel 10 may include a liquid crystal layer (not shown), a transparent electrode layer (not shown), a transparent substrate (not shown), and a color filter array (not shown).

An appropriate amount of liquid crystal is prepared in the liquid crystal layer. Here, the liquid crystal means an intermediate state of crystal and liquid. The liquid crystal represents an optical property according to a change in a voltage. For example, a direction of the arrangement of molecules that constitute the liquid crystal may be changed according to a change in an electric field applied to the liquid crystal.

A pair of transparent electrode layers are disposed at both sides of the liquid crystal layer so as to form the changed electric field in the liquid crystal layer. The electric field applied to the liquid crystal layer is changed according to a voltage input between the pair of transparent electrode layers.

The transparent electrode layer may include gate lines (not shown), data lines (not shown), and a thin film transistor (TFT).

The gate lines are disposed in a row direction to turn on or off the TFT according to gate signals, and the data lines are disposed in a column direction to transmit data signals to the plurality of pixels through the TFT. In this way, the electric field applied to the liquid crystal layer is changed according to the gate signals input through the gate lines and the data signals input through the data lines, and the molecular arrangement of the liquid crystal is changed according to the change in the electric field. Also, the liquid crystal layer transmits or blocks light according to the molecular arrangement of the liquid crystal.

The gate lines and the data lines may be formed of indium tin oxide (ITO) or indium zinc oxide (IZO). A pair of transparent substrates (not shown) constitute an exterior of the display panel 10 and protect the liquid crystal layer and the transparent electrode layer. The pair of transparent substrates may be formed of reinforced glass having good light transmittance or a transparent film.

The color filter array may include a red filter, a blue filter, and a green filter, which are respectively formed in each of regions corresponding to a plurality of pixels so that colors can be displayed in the plurality of pixels that constitute the display panel 10.

In this way, the display panel 10 blocks or transmits light generated in the backlight unit 50 that will be described later so that an image can be generated. In detail, the respective pixels that constitute the display panel 10 block or transmit light emitted from the backlight unit 50 so that images having various colors can be generated.

A driving circuit 20 provides driving signals for driving the display panel 10 to the display panel 10. The driving circuit 20 may include a data driving circuit 21 and a gate driving circuit 22.

The gate driving circuit 22 may be connected to the gate lines (not shown) of the display panel 10 and may transmit the gate signals to the gate lines. Also, the data driving circuit 21 may be connected to the data lines (not shown) of the display panel 10 and may transmit the data signals to the data lines.

The backlight unit 50 is installed in rear of the display panel 10 and generates light through which the display panel 10 generates an image.

The backlight unit 50 includes a plurality of light sources 51 disposed to emit light toward the display panel 10, a light guide plate (LGP) 60 that converts light generated in each of the plurality of light sources 51 into sheet light, a reflector sheet 35 that is disposed on a rear surface of the LGP 60 and reflects light output from the LGP 60, and a quantum dot sheet 37 that receives the light from the LGP 60 and outputs white light (light in which lights having various colors are mixed with each other).

The plurality of light sources 51 are disposed at sides of the LGP 60 and output light toward the LGP 60, as illustrated in FIG. 3.

In the exemplary embodiment, the plurality of light sources 51 may output light (monochromatic light) having one wavelength (one color) or light (white light) in which lights having a plurality of wavelengths are mixed with each other.

When the backlight unit 50 includes the quantum dot sheet 37, a plurality of light sources that output monochromatic light (in particular, blue light having a short wavelength) are usually used as the plurality of light sources 51. Hereinafter, the exemplary embodiments where the plurality of light sources 51 output blue light (hereinafter, referred to as "blue light") will be described.

The plurality of light sources 51 may employ light emitting diodes (LEDs) having a small heat dissipation amount or cold cathode fluorescence lamps (CCFLs).

The plurality of light sources 51 may be coupled to a printed circuit board (PCB) 52 formed of a flexible material and may be disposed at the edge portions of the display panel 10.

The LGP 60 changes a proceeding direction of light incident from sides of the edge type backlight unit 50 and emits light toward a front surface 61 of the LGP 60. In the exemplary embodiment, in order to change the proceeding direction of light, a plurality of convex striped patterns may be formed in the front surface 61 of the LGP 60, and a plurality of dots may be formed in a rear surface 62 of the LGP 60.

Also, the sizes of the convex striped patterns and a distance therebetween may be adjusted so that uniform light can be emitted toward the front surface 61 of the LGP 60, and the sizes of the plurality of dots and a distance therebetween may be adjusted.

In addition, the convex striped patterns in the front surface 61 of the LGP 60 may be formed in an embossed shape using a printing technique, and the dots in the rear surface 62 of the LGP 60 may be formed in an engraved shape using laser.

Thus, a part of light incident on an inside of the LGP 60 may be scattered by the dots formed in the rear surface 62 of the LGP 60 and may be emitted toward the front surface 61 of the LGP 60.

Also, the remaining part of the light may be reflected by the reflector sheet 35 disposed on the rear surface 62 of the LGP 60 toward the inside of the LGP 60.

In addition, a part of the reflected light may move to a center of the LGP 60, may be scattered in the center of the LGP 60, and may also be emitted toward the front surface 61 of the LGP 60.

In this way, due to refraction, reflection and scattering of the light generated in the LGP 60, the LGP 60 is disposed to emit uniform light toward the front surface 61 of the LGP 60.

The LGP 60 may employ polymethyl methacrylate (PMMA) or transparent polycarbonate (PC) that is transparent and has good strength.

The reflector sheet 35 is disposed on the rear surface 62 of the LGP 60 described above and reflects a part of light directed toward the rear surface 62 of the LGP 60 from the inside of the LGP 60 toward the inside of the LGP 60.

The reflector sheet 35 is manufactured by coating base materials with a material having high reflectivity. For example, the reflector sheet 35 may be manufactured by coating base materials, such as polyethylene terephthalate (PET), with a polymer having high reflectivity.

In addition, the quantum dot sheet 37 may be disposed on the front surface 61 of the LGP 60.

The quantum dot sheet 37 converts light emitted toward the front surface 61 of the LGP 60 into white light.

Quantum dots mean semiconductor particles having a small spherical shape with a size of nanometer (nm) and may include a central body having a size of approximately 2 to 10 nm and a shell formed of zinc sulfide (ZnS). Here, cadmium selenite (CdSe), cadmium tellurite (CdTe), or cadmium sulfide (CdS) may be used to form the central body of the quantum dots.

The quantum dots emit light by themselves or emit light having a particular wavelength by absorbing light when a voltage is applied to the quantum dots.

Electrons of the quantum dots are placed at a low energy level (or band) in a stable state. In this case, when the quantum dots absorb light from the outside, electrons at the low energy level move to a high energy level (or band). Since electrons placed at the high energy level are in an instable state, the electrons naturally move to the low energy level from the high energy level. In this way, while the electrons move to the low energy level from the high energy level, the electrons emit light corresponding to an energy difference between the high energy level and the low energy level. In this case, a wavelength of the emitted light is determined by the energy difference between the high energy level and the low energy level.

In particular, the quantum dots emit light having a short wavelength as their sizes are decreased, and the quantum dots emit light having a long wavelength as their sizes are increased. For example, quantum dots having a diameter of approximately 2 nm may emit blue light, and quantum dots having a diameter of approximately 10 nm may emit red light.

Also, by using the quantum dots having various sizes, the quantum dots may emit lights having various wavelengths from the red light to the blue light. In other words, by using the quantum dots having various sizes, light (white light) having a natural color may be generated.

The quantum dot sheet 37 may be manufactured by dispersing the above-described quantum dots into a resin.

When light is incident onto the quantum dot sheet 37 from the LGP 60, the incident light excites electrons of the quantum dots included in the quantum dot sheet 37. In other words, electrons at the low energy level (or band) move to the high energy level (or band) due to the incident light.

Subsequently, the quantum dots output light (white light) having various wavelengths according to their sizes while the excited electrons move to the low energy level from the high energy level. The light having various wavelengths passes through the optical member 30 and the display panel 10 so that an image can be generated.

As described above, the backlight unit 50 may include the plurality of light sources 51, the LGP 60, the reflector sheet 35, and the quantum dot sheet 37, thereby emitting uniform sheet light.

The optical member 30 refracts or scatters light so as to increase a viewing angle of the display apparatus 1 and to increase brightness of the display apparatus 1.

The optical member 30 may include various sheets. For example, the optical member 30 may include a diffusion sheet 31, a prism sheet 32, a protective sheet 33, and a dual brightness-enhancement film (DBEF) 34.

The diffusion sheet 31 diffuses light emitted from the backlight unit 50 along a surface so that color and brightness of the entire screen of the display apparatus 1 become uniform. Since light emitted from the LGP 60 is emitted through the patterns formed in the front surface 61 of the LGP 60, the patterns formed in the front surface 61 of the LGP 60 may be recognized from the light emitted from the LGP 60.

In order to prevent the patterns formed in the front surface 61 of the LGP 60 from being recognized from the light emitted from the LGP 60, the diffusion sheet 31 may diffuse the light emitted from the LGP 60 in a direction perpendicular to an emitting direction.

In other words, the diffusion sheet 31 diffuses the light emitted from the backlight unit 50 so that brightness of the entire surface of the display apparatus 1 can be maintained at a uniform level.

The light that passes through the diffusion sheet 31 is diffused in a direction perpendicular to a surface of the diffusion sheet 31 such that brightness of the display apparatus 1 is rapidly lowered. The prism sheet 32 refracts or concentrates the light diffused by the diffusion sheet 31, thereby increasing brightness of the display apparatus 1.

Also, the prism sheet 32 includes prism patterns having the shape of a triangular prism. A plurality of prism patterns are arranged to be adjacent to each other and constitute the shape of a plurality of bands. That is, the plurality of prism patterns that are patterns in which crests and valleys are arranged in a staggered manner, form rows and protrude toward the display panel 10.

The protective sheet 33 protects various components included in the backlight unit 50 from an external shock or introduction of foreign substances. In particular, scratch easily occurs in the prism sheet 32, and the protective sheet 33 may prevent scratch from occurring in the prism sheet 32.

The DBEF 34 that is a kind of polarizing film is also referred to as a reflective polarizing film.

The DBEF 34 transmits polarized light of the light emitted from the backlight unit 50 in a direction parallel to a polarization direction of the DBEF 34 and reflects polarized light in a different direction from the polarization direction of the DBEF 34.

Light is known as a transverse wave that vibrates in a direction perpendicular to a proceeding direction of the light. The polarizing film transmits light that vibrates in a particular direction, of light that vibrates in various directions and absorbs light that vibrates in a different direction from the particular direction of the light, of the light that vibrates in various directions.

Contrary to this, the DBEF 34 reflects polarized light in a different direction from the polarization direction of the DBEF 34. Here, the reflected light is recycled in the backlight unit 50, and brightness of the display apparatus 1 is improved by light recycling.

Meanwhile, the light scattered in the rear surface 62 of the LGP 60 is emitted toward the quantum dot sheet 37. In this case, at least a part of the light emitted from the LGP 60 may be absorbed onto the quantum dot sheet 37 and may excite the electrons included in the quantum dots of the quantum dot sheet 37. The electrons of the quantum dots excited by the light return to its stable state so that light (white light) having various wavelengths can be emitted.

Also, a part of the light emitted from the LGP 60 is not absorbed onto the quantum dot sheet 37 but may pass through the quantum dot sheet 37. In this way, the light emitted from the quantum dot sheet 37 includes white light generated by the quantum dot sheet 37 and light that passes through the quantum dot sheet 37.

Thus, a part of the light emitted from the quantum dot sheet 37 may pass through the optical member 30 and the display panel 10 and may be output to an outside of the display apparatus 1.

In detail, polarized light in the same direction as the polarization direction of the DBEF 34 included in the optical member 30 may pass through the optical member 30 including the DBEF 34 and may be output to the outside of the display apparatus 1 depending on whether the display panel 10 is driven. The light output to the outside of the display apparatus 1 may form an image output by the display apparatus 1.

Meanwhile, the plurality of light sources 51 of the backlight unit 50 generally output monochromatic light (in particular, blue light) having one wavelength (one color). The light output from the light source 51 is initially monochromatic light, but the monochromatic light is converted into white light in which lights having a plurality of wavelengths (various colors) are mixed with each other, while the light is recycled in the backlight unit 50.

As a result, a most part of the light output by the backlight unit 50 becomes white light.

The white light includes lights having a plurality of wavelengths (various colors) so that color reproducibility of the display apparatus 1 can be improved.

Meanwhile, a part of the light emitted from the plurality of light sources 51 may be absorbed by the mold frame 40 at edge portions of the display apparatus 1. That is, the amount of white light generated at the edge portions of the display apparatus 1 may be reduced. Also, a part of monochromatic light (blue light) emitted from the plurality of light sources 51 may pass through the LGP 60, the quantum dot sheet 37, the optical member 30, and the display panel 10 and may be emitted toward the outside of the display apparatus 1. As a result, a ratio of white light generated by light recycling with respect to the light emitted from the display apparatus 1 is reduced, and a ratio of monochromatic light (blue light) emitted from the plurality of light sources 51 with respect to the light emitted from the display apparatus 1 is increased. Thus, the image output by the display apparatus 1 may appear blue at the edge portions of the display apparatus 1.

Also, in this way, when the ratio of white light with respect to the light emitted from the edge portions of the display apparatus 1 is reduced and the ratio of monochromatic light (blue light) with respect to the light emitted from the edge portions of the display apparatus 1 is increased/decreased, there is a difference of color (color coordinates) between the light emitted from the edge portions of the display apparatus 1 and the light emitted from a center portion of the display apparatus 1.

In order to prevent this phenomenon, an optical converter 100 may be disposed in the mold frame 40, as illustrated in FIG. 3.

The mold frame 40 may be formed to have a shape of a rectangular ring. The mold frame 40 may include a first frame 41 disposed to be coupled to the front top chassis 11 and a second frame 42 disposed to be coupled to the rear bottom chassis 12. In the exemplary embodiment, the first frame 41 and the second frame 42 may be formed integrally with each other or individually.

The first frame 41 of the mold frame 40 may include a first support surface 41a disposed on a front surface of the first frame 41 to support the display panel 10 and a second support surface 41 b disposed on the front surface of the first frame 41 to support the optical member 30.

Meanwhile, the optical converter 100 may be disposed on an inner surface 43 of the mold frame 40 so as to convert the light emitted from the edge portions of the display apparatus 1 into white light. The optical converter 100 may be installed in an installation groove 45 recessed into the inner surface 43 of the mold frame 40.

The optical converter 100 may include an optical conversion material 110.

Here, the optical conversion material 110 that is a material that emits visible rays when light is incident on the optical conversion material 110 from the outside, may include a fluorescent material or quantum dots.

In other words, when the light is incident on the optical converter 100 of the mold frame 40 from the LGP 60, a part of the incident light is converted into white light using the optical conversion material 110, and light reflected by the reflector sheet 35 and white light converted by the optical conversion material 110 may be emitted together.

In detail, electrons of the optical conversion material 110 are placed at the low energy level (or band) in a stable state, and when the optical conversion material 110 absorbs light from the outside, the electrons at the low energy level move to the high energy level (or band). Because the electrons placed at the high energy level are in an instable state, the electrons naturally move to the low energy level from the high energy level and emit energy in the form of light while moving to the low energy level from the high energy level. Also, the wavelength of the emitted light is determined by an energy difference between the high energy level and the low energy level.

Thus, when light emitted from the plurality of light sources 51 or the light recycled in the backlight unit 50 is absorbed by the optical conversion material 110, the optical conversion material 110 may emit light.

In the exemplary embodiment, when the optical conversion material 110 emits yellow light and red light, yellow light emitted toward the optical conversion material 110 and blue light that passes through the optical conversion material 110 are mixed with each other so that white light can be emitted from the optical conversion material 110.

For example, when the blue light is incident from the plurality of light sources 51 toward the optical conversion material 110, the optical conversion material 110 may generate the yellow light and the red light due to the blue light of the plurality of light sources 51. In addition, a part of the blue light emitted from the plurality of light sources 51 may pass through the optical conversion material 110.

In this way, the yellow light and the red light generated by the optical conversion material 110 and the blue light that passes through the optical conversion material 110 are mixed with one another so that light emitted from the optical conversion material 110 becomes white light having various wavelengths (various colors).

In this way, the white light generated by the optical conversion material 110 disposed on the inner surface 43 of the mold frame 40 may increase the ratio of white light at edge portions of the backlight unit 50. In other words, the optical conversion material 110 formed at edge portions of the reflector sheet 35 may compensate for insufficiency of light recycling at the edge portions of the backlight unit 50.

As described above, in order to compensate for insufficiency of light recycling at the edge portions of the backlight unit 50, the optical converter 100 including the optical conversion material 110 is disposed on the inner surface 43 of the mold frame 40 included in the backlight unit 50.

In addition, as described above, the optical conversion material 110 disposed in the inner surface 43 of the mold frame 40 has been described. However, the exemplary embodiment is not limited thereto, and the optical conversion material 110 may be coated on the rear surface 62 of the LGP 60 as described below. In other words, the optical conversion material 110 may also be placed between the reflector sheet 35 and the LGP 60.

Meanwhile, in the exemplary embodiment of the, the mold frame 40 includes two support surfaces for supporting the display panel 10 and the optical member 30. However, the exemplary embodiment is not limited thereto. For example, the support surfaces of the mold frame 40 may have various shapes.

Meanwhile, the optical converter 100 may include optical conversion patterns 120 formed on the LGP 60.

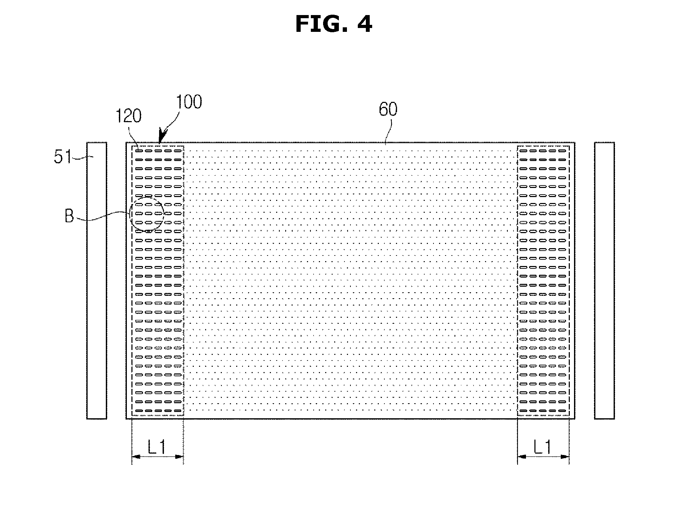

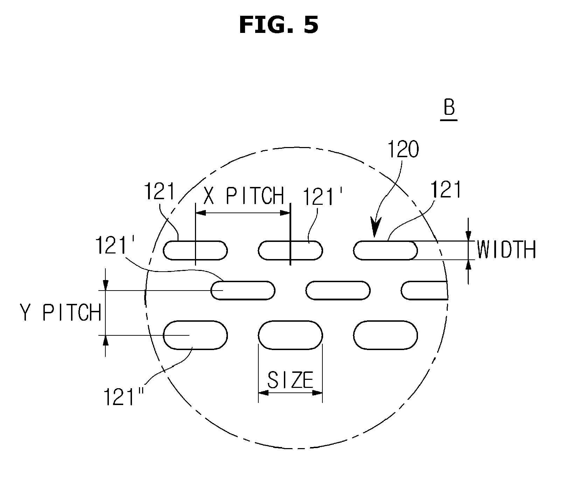

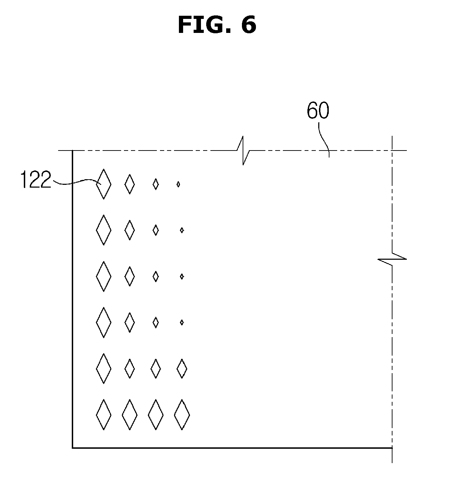

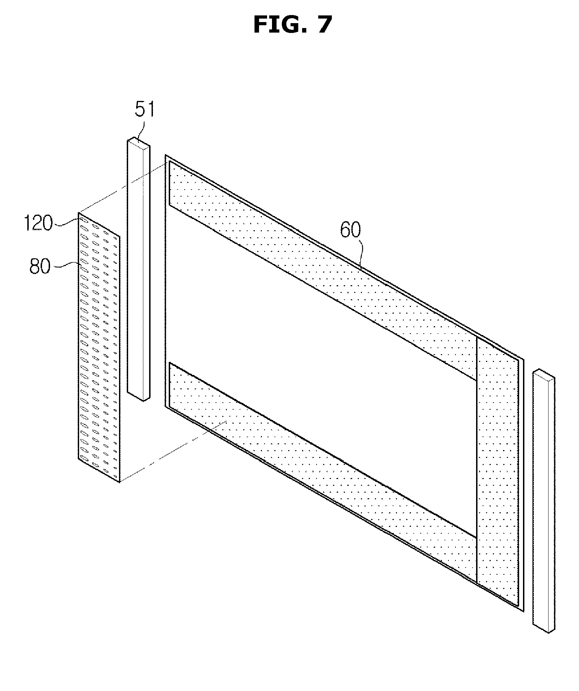

FIG. 4 is a schematic view of a light guide plate (LGP) having an optical converter of a display apparatus according to an exemplary embodiment, and FIG. 5 is an enlarged view of portion B of FIG. 4, and FIG. 6 is a schematic view of an LGP having an optical converter of a display apparatus according to an exemplary embodiment, and FIG. 7 is a schematic view of an LGP having an optical converter of a display apparatus according to an exemplary embodiment.

As illustrated in FIGS. 4 through 7, the optical converter 100 of the display apparatus 1 includes the optical conversion patterns 120.

As illustrated in FIGS. 4 through 6, the optical converter 100 may include the optical conversion patterns 120 formed on the rear surface 62 of the LGP 60.

In the exemplary embodiment, sizes and shape of the optical conversion patterns 120 may be adjusted in various ways.

Also, a width of each edge portion of the LGP 60 in which the optical conversion patterns 120 are formed, may be adjusted in various ways.

Also, the sizes and shape of the optical conversion patterns 120 may be adjusted in various ways.

In detail, the distance L1 of each edge portion of the LGP 60 in which the optical conversion patterns 120 are formed, and the sizes and shape of the optical conversion patterns 120 formed to the distance L1 of each edge portion may be adjusted in consideration of various variable, such as a distance between each light source 51 of the plurality of light sources 51 and the LGP 60, a width at which the mold frame 40 and the LGP 60 overlap each other, and the thickness of the quantum dot sheet 37.

For example, the optical conversion patterns 120 may include oval or racetrack patterns 121 having an oval or a racetrack shape, as illustrated in FIG. 4. In the exemplary embodiment, the oval / racetrack patterns 121 may have various sizes in lengths and widths.

In addition, the oval patterns 121 may adjust a distance X PITCH between respective center of oval / racetrack patterns 121' adjacent in a horizontal direction X and a distance Y PITCH between respective center of oval/racetrack patterns 121" adjacent in a vertical direction Y of the oval patterns 121 as shown in FIG. 5.

For example, if the width, at which the mold frame 40 and the LGP 60 overlap each other, is small, the amount of light blocked by the mold frame 40 is reduced such that the distance L1 of each edge portion of the LGP 60 in which the optical conversion patterns 120 are formed, can be reduced. On the other hand, if the width, at which the mold frame 40 and the LGP 60 overlap each other, is large, the amount of light blocked by the mold frame 40 is increased such that the distance L1 of each edge portion of the LGP 60 in which the optical conversion patterns 120 are formed, can be increased. Meanwhile, the optical conversion patterns 120 formed in the LGP 60 may include one among diamond-shaped diamond patterns 122 (FIG. 6), circular patterns having a circular shape (not shown), or rectangular patterns (not shown) having a rectangular shape.

However, the exemplary embodiment is not limited thereto. For example, the optical conversion patterns 120 may include various polygonal shapes, such as a pentagonal shape and a hexagonal shape.

Also, densities of the optical conversion patterns 120 formed on the LGP 60 may be adjusted in consideration of various variables.

For example, coating densities of the optical conversion patterns 120 may be reduced according to a distance from the edge portions of the LGP 60. This is because strongest monochromatic light (blue light) is emitted due to the insufficiency of light recycling at edge portions of the backlight unit 50 and light recycling is increased as the optical conversion patterns 120 get distant from the edge portions of the backlight unit 50 and thus the ratio of white light is increased.

Also, for example, when the diamond-shaped patterns 122 are formed on the rear surface 62 of the LGP 60, the optical conversion patterns 120 may be formed at the edge portions of the LGP 60 to have the largest diamond shape, and the area of the diamond-shaped patterns 122 may be reduced as the diamond-shaped patterns 120 get farther away from the edge portions of the LGP 60.

In addition, although not shown, the area of the diamond-shaped patterns 122 may be maintained at a constant level, and a distance between the diamond-shaped patterns 122 may vary. For example, the distance between the diamond-shaped patterns 122 placed at the edge portions of the LGP 60 may be the smallest and may also be increased as the diamond-shaped patterns 122 get distant from the edge portions of the LGP 60.

Referring to FIG. 7, in a display apparatus 1 according to an exemplary embodiment, a film 80 on which optical conversion patterns 120 are formed, may be attached to the LGP 60.

The optical conversion patterns 120 having various shapes may be formed in the film 80.

The film 80 having the optical conversion patterns 120 formed therein may be attached to the edge portions of the LGP 60.

In this case, sizes and densities of the optical conversion patterns 120 formed in the film 80 may be adjusted as described above with respect to FIG. 5.

For example, the film 80 may change the optical conversion patterns 120 patterned based on a distance between the optical conversion patterns 120 and the edge portions of the LGP 60. For example, the optical conversion patterns 120 placed at the edge portions of the LGP 60 may have the widest area, and the area of the optical conversion patterns 120 may be reduced as the optical conversion patterns 120 get farther away from the edge portions of the LGP 60.

Through the above configuration, the display apparatus 1 may reduce a color difference between center and edge portions of the display apparatus 1. That is, the optical converter 100 including the optical conversion material 110 is formed on the inner surface 43 of the mold frame 40, and the optical conversion patterns 120, sizes, densities and shapes of which can be adjusted, are formed in the LGP 60 so that the color difference between the center and the edge portions of the display apparatus 1 can be reduced.

As described above, in a display apparatus according to the above-described exemplary embodiments, colors of reflected lights emitted from a plurality of light sources disposed at edge portions of a backlight unit are adjusted so that color uniformity can be improved.

In addition, the occurrence of a color uniformity difference is prevented so that the quality of a product can be improved.

While exemplary embodiments have been particularly shown and described above, it would be appreciated by those skilled in the art that various changes may be made therein without departing from the principles and spirit of the inventive concept, the scope of which is defined in the following claims.

## Claims

1. A display apparatus comprising:
a display panel; and
a backlight unit configured to output light to the display panel,
wherein the backlight unit comprises:
light sources configured to emit light having a particular color;
a light guide plate (LGP) configured to scatter light incident from the light sources and to emit the scattered light through an emitting surface; and
an optical converter configured to convert light emitted from the light sources, and
the optical converter is disposed at edge portions of the backlight unit and comprises an optical conversion material for converting color of light and optical conversion patterns disposed on the LGP.

2. The display apparatus of claim 1, wherein the optical conversion material comprises a fluorescent material.

3. The display apparatus of claim 2, wherein the backlight unit further comprises a mold frame supporting the display panel, and
the optical converter is disposed on an inner surface of the mold frame.

4. The display apparatus of claim 3, wherein the mold frame comprises:
a front surface disposed so that the display panel is supported on the front surface; and
a rear surface in which an installation groove for installing the optical converter is formed.

5. The display apparatus of claim 1, wherein the optical conversion patterns comprise one among a circular shape, an oval shape, a rectangular shape, and a polygonal shape.

6. The display apparatus of claim 5, wherein the optical conversion patterns are formed on a rear surface of the LGP.

7. The display apparatus of claim 1, wherein the backlight unit further comprises a quantum dot sheet configured to convert light emitted toward a front surface of the LGP.

8. The display apparatus of claim 1, wherein densities of the optical conversion patterns are formed by a difference between the edge portions and a center portion of the LGP.

9. The display apparatus of claim 1, wherein densities of the optical conversion patterns are reduced as the optical conversion patterns get closer to a center of the LGP from ends of the LGP.

10. The display apparatus of claim 1, wherein densities of the optical conversion patterns are reduced as the optical conversion patterns get closer to a center of the LGP from ends of the LGP.

11. The display apparatus of claim 1, wherein the light sources comprise one among red, green, and blue colors.

12. The display apparatus of claim 11, wherein the optical converter comprises a yellow fluorescent material for converting blue light into white light.

## Amended claims

### Amended claims in accordance with Rule 137(2) EPC.

1. A display apparatus (1) comprising:
a display panel (10); and
a backlight unit (50) configured to output light to the display panel,
wherein the backlight unit comprises:
light sources (51) configured to emit light having a particular color;
a light guide plate (LGP) (60) configured to scatter light incident from the light sources and to emit the scattered light through an emitting surface;
a mold frame (40) supporting the display panel, wherein the mold frame and LGP have a distance of overlap (L1) such that light on its way from the light source to the display panel is blocked by the mold frame in the overlap; and
an optical converter (100) configured to convert color of light emitted from the light sources ;
**characterised in that** the optical converter comprises optical conversion patterns (120) disposed on the LGP within the overlap.

2. The display apparatus (1) of claim 1, wherein the optical converter further comprises an optical conversion material (110).

3. The display apparatus (1) of claim 2, wherein the optical conversion material (110) comprises a fluorescent material.

4. The display apparatus (1) of claim 3, wherein the optical conversion material (110) is disposed on an inner surface (43) of the mold frame (40).

5. The display apparatus (1) of claim 4, wherein the mold frame (40) comprises:
a front surface (41b) disposed so that the display panel (10) is supported on the front surface; and
a rear surface in which an installation groove (45) for installing the optical conversion material is formed.

6. The display apparatus (1) of claim 1, wherein the optical conversion patterns (120) comprise one among a circular shape, an oval shape, a rectangular shape, and a polygonal shape.

7. The display apparatus (1) of claim 6, wherein the optical conversion patterns (120) are formed on a rear surface (62) of the LGP (60).

8. The display apparatus (1) of claim 1, wherein the backlight unit (50) further comprises a quantum dot sheet (37) configured to convert light emitted toward a front surface of the LGP (60).

9. The display apparatus (1) of claim 1, wherein densities of the optical conversion patterns (120) are formed by a difference between the edge portions and a center portion of the LGP (60).

10. The display apparatus (1) of claim 1, wherein densities of the optical conversion patterns (120) are reduced as the optical conversion patterns get closer to a center of the LGP (60) from ends of the LGP.

11. The display apparatus (1) of claim 1, wherein the light sources (51) comprise one among red, green, and blue colors.

12. The display apparatus (1) of claim 11, wherein the optical converter (100) comprises a yellow fluorescent material for converting blue light into white light.
